Europäisches Patentamt

European Patent Office

Office européen des brevets

(11) Veröffentlichungsnummer: **0 173 678**
**A2**

## (12) EUROPÄISCHE PATENTANMELDUNG

(21) Anmeldenummer: 85890199.4

(22) Anmeldetag: 30.08.85

(51) Int. Cl.⁴: **E 06 B 3/34**

(30) Priorität: 31.08.84 AT 2794/84

(43) Veröffentlichungstag der Anmeldung: 05.03.86
Patentblatt 86/10

(84) Benannte Vertragsstaaten: **AT BE CH DE FR GB IT LI NL SE**

(71) Anmelder: **ADC-Beteiligungsgesellschaft m.b.H., Prinz-Eugen-Strasse 54, A-1040 Wien (AT)**

(72) Erfinder: **Baumann, Ernst, Baumgasse 29-41, A-1030 Wien (AT)**

(74) Vertreter: **Gibler, Ferdinand, Dipl.Ing.Dr.tech., Dorotheergasse 7/14, A-1010 Wien (AT)**

(54) **Lüftungsflügel oder dergleichen.**

(57) Lüftungsflügel, der mittels wenigstens zweier Bänder schwenkbar gelagert ist, von denen das eine Band in der Nähe einer Ecke des Flügels mit aussen befindlichem Drehpunkt und das andere Band mit innen befindlichem Drehpunkt angeordnet ist, wobei die Schwenkachse des Lüftungsflügels räumlich diagonal von aussen nach innen verläuft, wobei wenigstens eine Reihe von im gleichen Sinn um räumlich diagonale Schwenkachsen verschwenkbaren Flügeln (1) angeordnet sind, die einander im gleichen Sinn überlappen.

0173678

- 1 -

## Lüftungsflügel oder dergleichen

Die Erfindung bezieht sich auf einen Lüftungsflügel, der mittels wenigstens zweier Bänder schwenkbar gelagert ist, von denen das eine Band in der Nähe einer Ecke des Flügels mit außen befindlichem Drehpunkt und das andere Band mit innen befindlichen Drehpunkt angeordnet ist, wobei die Schwenkachse des Lüftungsflügels räumlich diagonal von außen nach innen verläuft.

Solche Lüftungsflügel sind an sich bekannt.
Am häufigsten sind Flügel in Verwendung, deren Schwenkachsen außerhalb ihres Schwerpunktes liegen. Das hat bei manchen Anwendungen den Nachteil, daß beim Öffnen und/oder Schließen der Flügel große Gewichte gehoben werden müssen.

Es gibt auch Ausführungen von Flügeln, bei denen die Schwenkachsen zwar im wesentlichen durch ihre Schwerpunkte gehen, bei denen sich aber die Bänder im Bereich der Flügelkonstruktion, beispielsweise seitlich in Flügelrahmen eingelassen, befinden, was den Nachteil hat, das die Flügel in diesem Bereich oft nicht dicht sind.

Weiters wurde durch die US-PS 2 295 277 ein Fenster der eingangs erwähnten Art für Automobile bekannt, bei dem sich aber ebenfalls erhebliche Probleme im Hinblick auf dessen Dichtheit ergeben.

Ziel der Erfindung ist es diese Nachteile zu vermeiden und eine Anordnung der eingangs erwähnten Art vorzuschlagen, die eine besonders günstige Belüftung ermöglicht und die trotzdem eine sichere Abdichtung ermöglicht.

Erfindungsgemäß wird dies dadurch erreicht, daß wenigstens eine Reihe von im gleichen Sinn um räumlich diagonale Schwenkachsen verschwenkbare Flügeln angeordnet sind, die einander im gleichen Sinn überlappen.

Durch die Anordnung mehrere Lüftungsflügel mit diagonaler Schwenkachse in einer Lüftungsöffnung ist eine optimale Belüftung erreichbar, da der Wind die abstehenden Flügelteile ohne Bildung von Turbulenzen bzw. Stauzonen besser umgehen kann. Sollte der Winddruck genau senkrecht zu den Flügeln erfolgen, so wird dieser durch die zum Teil einander abdeckenden Flügeln reduziert. Durch die überlappende Ausbildung ist die Anordnung in einer langen Öffnung auch ohne Anbringung von Querholmen möglich. Ein weiterer Vorteil insbesondere bei viereckigen Lüftungsflügel besteht darin, daß zufolge der diagonalen Verschwenkbarkeit im Dachverbund eine solche Anordnung erreicht werden kann, daß die Oberkante der Lüftungsflügel den Dachverbund bzw. ein Hohlelement desselben untergreift während durch die Unterkante eine Übergreifung erfolgt. Dadurch ist eine bedeutende Verbesserung im Hinblick auf eine sichere Abdichtung erzielbar. Außerdem ist eine solche Lösung besonders für Schrägfenster geeignet. Um eine besonders hohe Stabilität der Lüftungsflügel zu erzielen, kann weiters vorgesehen sein, daß wenigstens ein Holm oder dgl. im Bereich der oberen Ränder von seitlich aufeinanderfolgenden Flügel diese entlang wenigstens einer streifenförmigen Zone nach aussen hin, wenigstens ein Holm oder dgl. im Bereich der unteren Ränder der seitlichen aufeinanderfolgenden Flügel diese entlang wenigstens einer streifenförmigen Zone nach innen hin abdeckt, wobei gebenenfalls Dichtungsstreifen, Dichtungsprofile oder dgl. dazwischengeschaltet sind.

Weiters kann vorgesehen sein, daß die in Reihe aufeinanderfolgenden, einander überlappenden Flügel zumindest im Bereich der Überlappung profiliert sind. Auf diese Weise ist es möglich das Eindringen von Wasser aufgrund der Kapillarwirkung in engen Spalten durch entsprechende Erweiterungen zu verhindern.

Dabei kann weiters vorgesehen sein, daß die in Reihe aufeinanderfolgenden Flügel im Bereich der Überlappung gefälzt sind, wodurch eine praktisch durchgehende ebene Oberfläche der Lüftungsflügel im geschlossenen Zustand erreichbar ist.

In diesem Zusammenhang ergibt sich eine besonders einfache Lösung, wenn die in Reihe aufeinanderfolgenden Flügel seitlich schräge Stoßflächen aufweisen, durch die sie einander überlappen. Um eine einfache Betätigung der Lüftungsflügel zu ermöglichen kann weiters vorgesehen sein, daß bei in Reihe seitlich aufeinanderfolgenden Flügel diese an in Abständen von den Schwenkachsen befindlichen Stellen mit Stangen oder Seilen verbunden sind, die mit einer entlang der aufeinanderfolgenden Flügel verlaufenden, schwenkbar gelagerten Welle oder dergleichen gekoppelt sind. Dabei kann weiters vorgesehen sein, daß die Stangen oder dgl. über Hebelarme mit der Welle gekoppelt sind, wodurch sich entsprechende Anpassungen über die sich dadurch ergebenden Hebelverhältnisse möglich werden.

Die Erfindung wird nun an Hand der Zeichnung näher erläutert.

Dabei zeigt:

Fig.1 in Ansicht drei im wesentlichen nebeneinander angeordnete, einander seitlich überlappende Lüftungsflügel mit räumlich diagonalen Schwenkachsen in geschlossenem Zustand,

Fig.2 diese Lüftungsflügel im Schnitt II-II,

Fig.3 zeigt diese Lüftungsflügel im Schnitt III-III,

Fig.4 die gleichen Lüftungsflügel in geöffnetem Zustand,

Fig.5 zeigt einen Schnitt durch vier entlang einer geneigten Dachfläche aufeinanderfolgende Flügel,

Fig.6 zeigt in einem Lotschnitt einen als Schrägflächenfenster eingesetzten erfindungsgemäßen Flügel,

Fig.7 einen Schnitt im Bereich der Stoßstellen zweier seitlich aufeinanderfolgender Flügel,

Fig.8 einen Schnitt im Bereich der Stoßstellen zweier seitlich aufeinanderfolgender Flügel, die einander durch aufgesetzte Leisten überlappen,

Fig.9 einen Schnitt im Bereich der Stoßstellen zweier seitlich aufeinanderfolgender Flügel, die einander durch aufgesetzte Profilleisten und Dichtungseinlagen überlappen,

Fig.10 einen Schnitt im Bereich der Stoßstellen zweier seitlich aufeinanderfolgender Flügel,

Fig.11 einen Schnitt im Bereich der Stoßstellen zweier seitlich aufeinanderfolgender Flügel, wobei diese Stoßstelle durch Verzahnung besonders dicht ausgebildet ist.

0173678

- 5 -

Fig. 12 einen Schnitt im Bereich der Stoßstellen zweier seitlich aufeinanderfolgender profilierter Flügel, die beispielsweise durch Extrudieren hergestellt sein können,

Fig. 13 einen Schnitt im Bereich der Stoßstellen zweier seitlich aufeinanderfolgender profilierter Flügel, die beispielsweise als Hohlkörper ausgebildet und ausgeschäumt sein können,

Fig. 14 einen Schnitt durch Teile zweier seitlich aufeinanderfolgender Flügel, die aus extrudierten Stegplatten hergestellt sind,

Fig. 15 einen Schnitt durch einen Teile eines Flügels der aus einer extrudierten Platte mit zickzackförmig aufeinanderfolgenden Stegen besteht,

Fig. 16 einen Querschnitt durch den First eines Glashauses mit erfindungsgemäßen Lüftungsflügeln, die mittels eines Gestänges öffenbar sind,

Fig. 17 eine Ausbildungsvariante des unteren Anschlages bzw. eine Befestigungseinrichtung für den Lüftungsflügel mittels eines Bandes,

Fig. 18 einen Teil eines durch einen Rahmen verstärkten Lüftungsflügels, und

Fig. 19 einen Teil eines zum Öffnen und Schließen von Lüftungsflügel bestimmten Gestänges.

Gemäß den dargestellten Fig. ist mit 1 ein erfindungsgemäßer Lüftungsflügel bezeichnet. Mit 2 ist ein Band bezeichnet, mittels dem der Flügel 1 mit einem fixen oberen Gebäudeteil 4, insbesondere Holm, Leiste, Profil oder dgl. verbunden ist. Mit 3 ist ein im wesentlichen diagonal gegenüber angeordnetes Band bezeichnet, mittels dem der Flügel 1 mit einem fixen unteren Gebäudeteil 5, insbesondere Holm, Leiste, Profil oder dgl. verbunden ist. Mit 6 ist die Schwenkachse bezeichnet, die vom Drehpunkt des einen Bandes 2 zum Drehpunkt des anderen Bandes 3 räumlich diagonal durch den Flügel 1 verläuft. Mit 7 ist ein Rahmen, Versteifungsleiste, -profil oder dgl. bezeichnet. Mit 8 ist eine Stange oder ein Seil bezeichnet, die bzw. das mit dem Flügel 1 verbunden und mit einer Welle 9 gekoppelt ist. Mit 10 ist ein Hebelarm bezeichnet, der die Stange 8 mittels der schwenkbar gelagerten Welle 9 auf- und abbewegt.

Wie den dargestellten Fig. zu entnehmen ist, ist in der Nähe einer Ecke des Flügels 1 das eine Band 2 außen, in der Nähe der diagonal gegenüberliegenden Ecke des Flügels 1 das andere Band 3 innen angeordnet. Dadurch wird erreicht, daß die Schwenkachse 6 durch den Schwerpunkt des Flügels 1 oder zumindest nahe diesem verläuft. Der Flügel 1 kann in geschlossenem Zustand waagrecht, senkrecht oder geneigt angeordnet sein. Bei senkrecht oder geneigt angeordneten Flügeln 1 ist das Band 2 mit außen liegendem Drehpunkt oben, das Band 3 mit innen liegendem Drehpunkt an im wesentlichen diagonal gegenüberliegender Stelle unten angeordnet. Dabei verläuft die Schwenkachse 6 des Flügels 1 von außen nach innen und zwar von der Nähe einer oberen Ecke des Flügels 1 nach unten zur Nähe einer im wesentlichen diagonal gegenüberliegenden Ecke des Flügels 1. Da die Schwenkachse 6 durch den Schwerpunkt des Flügels 1 verläuft, braucht man auch bei waagrecht oder geneigt angeordneten Flügeln 1 beim Öffnen oder Schließen derselben kein Gewicht zu heben. Es können beispielsweise große Dachflächen schnell manuell geöffnet bzw. geschlossen werden. Es erübrigen sich aufwendige Übersetzungen oder ein Motor mit entsprechender Energiezuführung. Um große Flächen öffnen zu können, können mehrere bzw. eine ganze Reihe seitlich aufeinanderfolgender Flügel 1 angeordnet sein, die einander im gleichen Sinn überlappen und gleichzeitig zu öffnen und zu schließen sind. Solcherart in Reihe angeordnete Flügel 1 sind oben mittels Bändern 2 mit einem fixen Gebäudeteil 4, unten mittels Bändern 3 mit einem fixen Gebäudeteil 5 verbunden. Da eine Reihe solcher im wesentlichen nebeneinander angeordneter Flügel 1 einander im gleichen Sinn überlappen, werden seitliche Rahmenteile, Stege oder dgl. eingespart. In Reihe angeordnete, im wesentlich seitlich aufeinanderfolgende Flügel 1 sind im gleichen Sinn um räumlich diagonale Achsen 6 schwenkbar. Vorzugsweise überlappen die in Reihe angeordneten, seitlich aufeinanderfolgenden Flügel 1 einander.

Gemäß den dargestellten Figuren sind geneigt angeordnete Flügel 1 mittels der Bänder 2 oben mit einem außenliegendem im wesentlichen quer zur Flügelreihe verlaufenden Holm 4, Profil oder dgl., unten mittels der Bänder 3 mit einem innen liegenden, im wesentlichen quer zur Flügelreihe verlaufenden Holm 5, Profil oder dgl. verbunden.

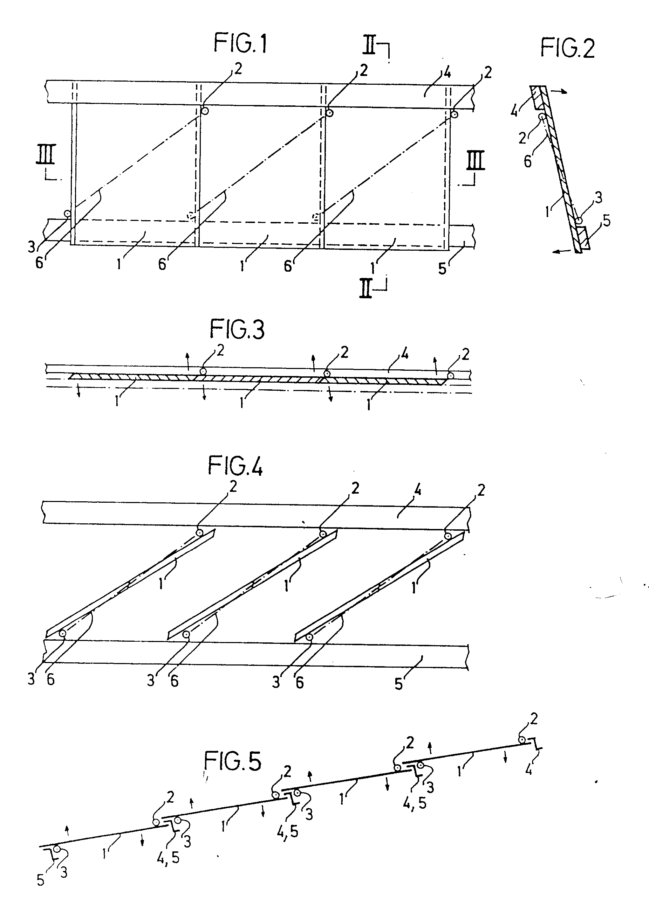

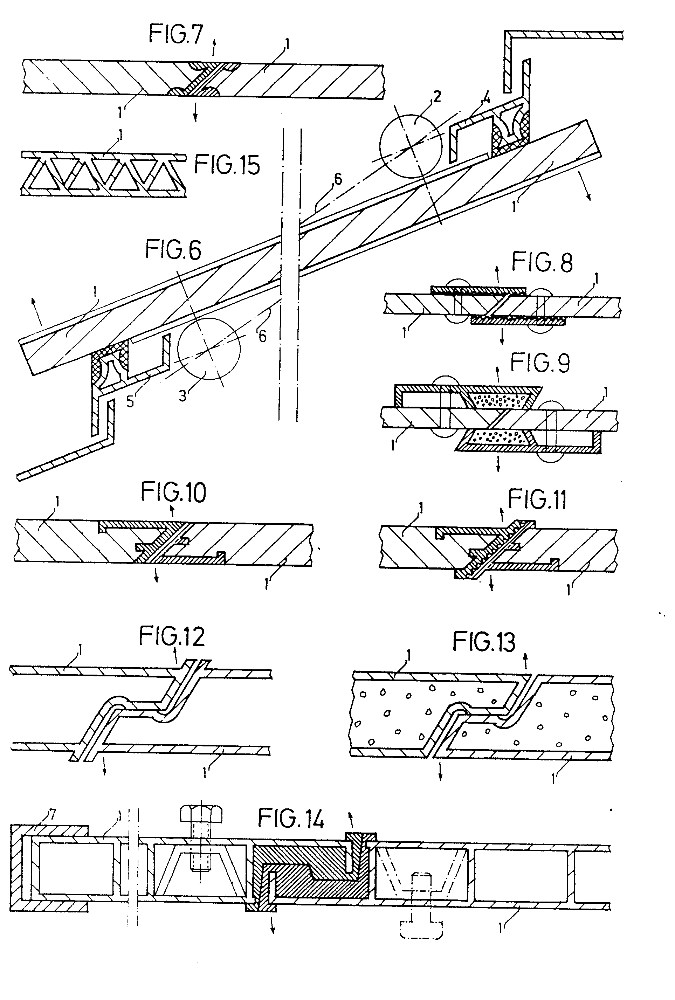

Wie insbesondere die Fig. 2 und 6 deutlich zeigen, deckt wenigstens ein Holm 4 oder dgl. im Bereich der oberen Ränder von seitlich aufeinanderfolgenden Flügeln 1 diese entlang einer streifenförmigen Zone nach außen hin ab, wenigstens ein Holm 5 oder dgl. im Bereich der unteren Ränder der seitlich aufeinanderfolgenden Flügeln 1 diese entlang einer streifenförmigen Zone nach innen hin ab, wobei gemäß Fig. 6 Dichtungsstreifen, Dichtungsprofile oder dgl. dazwischengeschaltet sind.

Wie gemäß den Fig. 12 bis 14 deutlich dargestellt ist, sind die in Reihe aufeinanderfolgenden Flügel 1 im Bereich der gegenseitigen Überlappung vorzugsweise profiliert, wodurch die betreffende Stoßstelle entsprechend dicht ist. Die Flügel 1 können im Bereich ihrer Überlappung gefälzt sein. Die Flügel 1 können aber auch schräge Stoßflächen aufweisen, durch die sie einander überlappen, wie die Fig. 7, 10 und 11 zeigen.

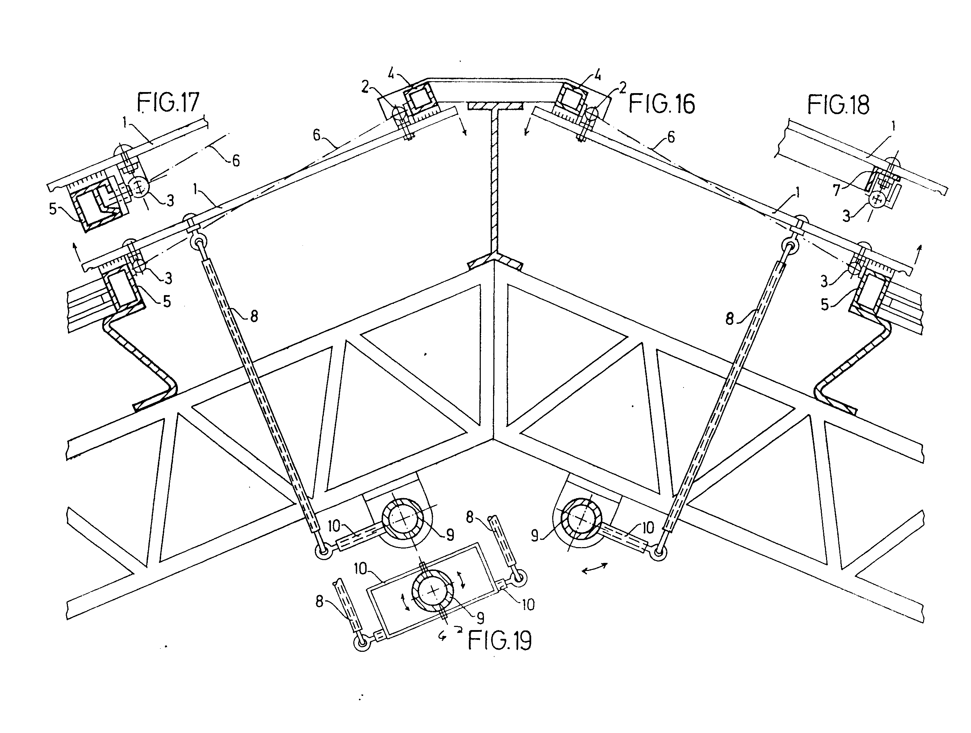

Gemäß Fig. 16 sind die in Reihe angeordneten Flügel 1 an in Abständen von den Schwenkachsen 6 befindlichen Stellen mit Stangen 8 verbunden, die mit einer entlang der aufeinanderfolgenden Flügel 1 verlaufenden, schwenkbar gelagerten Welle 9 oder dgl. gekoppelt sind. Die Stangen 8 oder dgl. sind über Hebelarme 10 mit der Welle 9 gekoppelt.

Mittels der Stangen 8 werden die einerseits der Schwenkachsen 6 befindlichen Hälften der Flügel 1 nach oben, die andererseits der Schwenkachsen 6 befindlichen Hälften nach unten bewegt und die Flügel 1 geöffnet bzw. geschlossen. Wie Fig. 19 zeigt können auch Stangenpaare pro Flügel 1 angeordnet sein, wobei sich beim Öffnen bzw. Schließen eine Stange 8 nach oben, die andere Stange 8 nach unten bewegt. Um bei der Montage von in Reihe seitlich aufeinanderfolgender Flügel 1 diese exakt zueinander ausrichten zu können, können die Bänder 2 und 3 mittels Hammerkopfschrauben oder Ankerschrauben an Ankerleisten bzw. Ankerprofilen 5 befestigt sein, wie Fig. 17 zeigt.

Fig. 18 zeigt ein Ausführungsbeispiel, bei dem der Flügel 1 durch einen Rahmen 7 verstärkt ist. In diesem Fall ist der Rahmen 7 durch Schrauben mit einer Plexiglasplatte 1 oder dgl. verbunden. Selbstverständlich können auch Rahmen vorgesehen sein, in die in an sich bekannter Weise beispielsweise Glas oder Plexiglas oder Kunststoff eingesetzt ist. Steg-Doppelplatten gemäß Fig. 14 können vorteilhaft durch in die Hohlräume eingesetzte Verstärkungsleisten aus Metall, Kunststoff oder Holz sein.

Selbstverständlich ist die Erfindung nicht auf die in den Zeichnungen dargestellten Ausführungsbeispiele beschränkt.

Beispielsweise können die Dichtungsstreifen wesentlich differenzierter ausgebildet sein.

Die Flügel 1 können aus geformten Blech oder beispielsweise aus Asbestzement sein. Das Öffnen und Schließen der Flügel 1 kann mittels Seilen erfolgen, die sich auf der Welle 9 auf und abwickeln. Die Stangen 8 bzw. Seile können Längenausgleichsfedern aufweisen bzw. mit solchen gekoppelt sein. Mittels dieser Federn können Ungenauigkeiten ausgeglichen werden. Die Länge der Stange 8 kann gegebenfalls verstellbar sein. Fig. 16 zeigt ein Ausführungsbeispiel mit in Ihrer Länge verstellbaren Stangen 8. In Reihe nebeneinander angeordnete, vorzugsweise einander überlappende Flügel 1 müssen nicht unbedingt in einer Ebene liegen. Sie können beispielsweise in Form eines Polygons oder eines Teiles davon angeordnet sein. Auf diese Weise lassen sich beispielsweise ökonomische Lüftungslaternen und dgl. herstellen.

Patentansprüche:

1. Lüftungsflügel, der mittels wenigstens zweier Bänder schwenkbar gelagert ist, von denen das eine Band in der Nähe einer Ecke des Flügels mit außen befindlichem Drehpunkt und das andere Band mit innen befindlichen Drehpunkt angeordnet ist, wobei die Schwenkachse des Lüftungsflügels räumlich diagonal von außen nach innen verläuft,
dadurch gekennzeichnet, daß wenigstens eine Reihe von im gleichen Sinn um räumlich diagonale Schwenkachsen verschwenkbaren Flügeln (1) angeordnet sind, die einander im gleichen Sinn überlappen.

2. Lüftungsflügel nach Anspruch 1, dadurch gekennzeichnet, daß wenigstens ein Holm (4) oder dgl. im Bereich der oberen Ränder von seitlich aufeinanderfolgenden Flügel (1) diese entlang wenigstens einer streifenförmigen Zone nach außen hin, wenigstens ein Holm (5) oder dgl. im Bereich der unteren Ränder der seitlich aufeinanderfolgenden Flügel (1) diese entlang wenigstens einer streifenförmigen Zone nach innen hin abdeckt, wobei gegebenenfalls Dichtungsstreifen, Dichtungsprofile oder dgl. dazwischengeschaltet sind.

3. Lüftungsflügel nach Anspruch 1 oder 2, dadurch gekennzeichnet, daß die in Reihe aufeinanderfolgenden, einander überlappenden Flügel (1) zumindest im Bereich der Überlappung profiliert sind.

4. Lüftungsflügel nach einem der Ansprüche 1-3, dadurch gekennzeichnet, daß die in Reihe aufeinanderfolgenden Flügel (1) im Bereich der Überlappung gefälzt sind.

5. Lüftungsflügel nach einem der Ansprüche 1-4, dadurch gekennzeichnet, daß die in Reihe aufeinanderfolgenden Flügel (1) seitlich schräge Stoßflächen aufweisen, durch die sie einander überlappen.

6. Lüftungsflügel nach einem der Ansprüche 1-5, dadurch gekennzeichnet, daß bei in Reihe seitlich aufeinanderfolgenden Flügel (1) diese an in Abständen von den Schwenkachsen (6) befindlichen Stellen mit Stangen (8) oder Seilen verbunden sind, die mit einer entlang der aufeinanderfolgenden Flügel (1) verlaufenden, schwenkbar gelagerten Welle (9) oder dgl. gekoppelt sind.

7. Lüftungsflügel nach einem der Ansprüche 1-6, dadurch gekennzeichnet, daß die Stangen (8) oder dgl. über Hebelarme (10) mit der Welle (9) gekoppelt sind.

FIG.1                    II

III                                          III

II

FIG.2

FIG.3

FIG.4

FIG.5

2/3

0173678

FIG.7

FIG.15

FIG.6

FIG.8

FIG.9

FIG.10

FIG.11

FIG.12

FIG.13

FIG.14

FIG.17

FIG.16

FIG.18

FIG.19

3/3    0173678